# EUROPEAN PATENT SPECIFICATION

(11) **EP 2 293 610 B1**
(45) Date of publication and mention of the grant of the patent: **30.11.2016**
(21) Application number: 09765398.4
(22) Date of filing: 16.06.2009
(51) Int. Cl.: H04W 12/04, H04L 29/06

(54) **METHOD AND DEVICE FOR PREVENTING LOSS OF NETWORK SECURITY SYNCHRONIZATION**
VERFAHREN UND VORRICHTUNG ZUR VERHINDERUNG DES VERLUSTES DER SYNCHRONISATION DER NETZWERKSICHERHEIT
PROCÉDÉ ET DISPOSITIF DE PRÉVENTION DE PERTE DE SYNCHRONISATION DE SÉCURITÉ DE RÉSEAU

(30) Priority: 16.06.2008 CN 200810039233; 25.08.2008 CN 200810146831
(43) Date of publication of application: 09.03.2011
(60) Divisional application: 16187307.0
(73) Proprietor: Huawei Technologies Co., Ltd., Longgang District Shenzhen, Guangdong 518129 (CN)
(72) Inventor: CHEN, Jing, Longgang District Shenzhen 518129 (CN); YANG, Yanmei, Longgang District Shenzhen 518129 (CN); XU, Yixian, Longgang District Shenzhen 518129 (CN); WONG, Marcus, Longgang District Shenzhen 518129 (CN); ZHANG, Aiqin, Longgang District Shenzhen 518129 (CN)
(74) Representative: Kreuz, Georg Maria
(86) International application number: PCT/CN2009/072292
(87) International publication number: WO 2009/152759

(56) References cited:
- EP-A1- 1 915 022
- CN-A- 1 553 730
- CN-A- 1 905 734
- US-A1- 2008 096 530
- "3rd Generation Partnership Project; Technical Specification Group Core Network and Terminals; Characteristics of the Universal Subscriber Identity Module (USIM) application (Release 8)", 3GPP STANDARD; 3GPP TS 31.102, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.1.0, 1 March 2008 (2008-03-01), pages 1-188, XP050373473,
- '3G Security; Security architecture (Release 7)' 3GPP TS 33.102 V7.1.0 December 2006, XP008147291

## Description

### FIELD OF THE INVENTION

The present invention relates to the field of communications technology, and in particular, to a network security technology.

### BACKGROUND OF THE INVENTION

Presently, mobile communications have been developed and become very popular. The process of mobile communications involves a problem of a handover of a terminal between different access systems.

Radio access networks of a base station include a Second Generation (2G) mobile communication system, a Third Generation (3G) mobile communication system, and a future Long Term Evolution (LTE) system. Security protection levels and protective measures between a terminal and the radio access networks are different. The heterogeneous access networks involve different access technologies, and security parameter structures are not completely the same. When the terminal is handed over between the different access networks, the reuse of security context parameters in an original system is also considered in some circumstances.

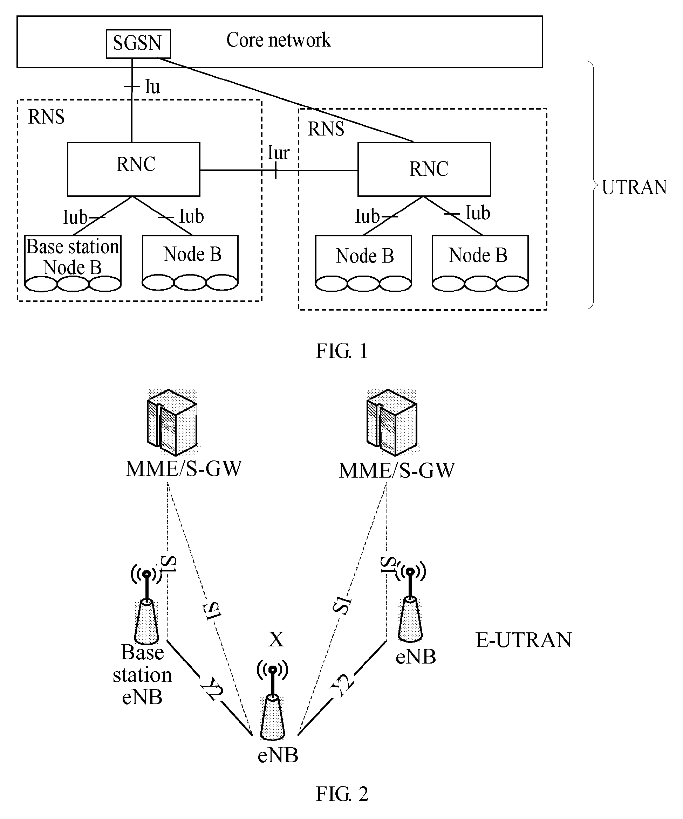

FIG. 1 is a view of a network structure of a Universal Terrestrial Radio Access Network (UTRAN). The UTRAN includes one or more Radio Network Subsystems (RNSs). One RNS consists of one Radio Network Controller (RNC) and one or more base stations (Node Bs). The interface between the RNC and a Core Network (CN) is an Iu interface. The Node B is connected to the RNC through an Iub interface. In the UTRAN, the RNCs are interconnected through an Iur. The Iurs may be connected through a direct physical connection between the RNCs or through a transport network. The RNC is configured to allocate and control radio resources of the Node B connected or related to the RNC. The Node B performs conversion of data streams between the Iub interface and the Iu interface, and meanwhile participates in a part of radio resource management.
The RNS is connected to the CN through the Iu interface between the RNC and a Serving General Packet Radio Service (GPRS) Support Node (SGSN).

A User Equipment (UE) accesses the UTRAN, and after Authentication and Key Agreement (AKA), the UE and the network together generate a Ciphering Key (CK) and an Integrity Key (IK).

A length of a Key Set Identifier (KSI) is 3 bits, and the KSI is used to identify the CK and the IK. The KSI ranges from 0 to 111. However, if the KSI is 111, which indicates that the CK and the IK are unavailable, when the UE attaches next time, the network side, for example, the SGSN, detects that the KSI is 111, and then a new authentication process (AKA) is triggered.

According to different types of domain (a packet switched domain or a circuit switched domain), the CKs and the IKs are further divided into two sets of keys: CKₚₛ and IKₚₛ of the packet switched domain and CK_{cs} and IK_{cs} of the circuit switched domain.

The CK and the IK have a lifetime, which is identified by a START value. The START value ranges from 0 to a threshold value. When a CK and an IK are generated in original AKA, the START value is 0. With the use of the CK and the IK, the START value increases continuously till the threshold is reached. When the START value reaches the threshold, new AKA is triggered.

When Mobile Equipment (ME) is powered off, a root key Kasme stored in the ME, a START value and a KSIasme are all cleared. When the ME is powered on again, security parameters (such as the CKₚₛ, IKₚₛ, KSI, and START value) stored in a Universal Subscriber Identity Module (USIM) are sent to the ME, so that the CKₚₛ and the IKₚₛ may also be reused normally, and new AKA is not required.

FIG. 2 is a view of a network structure of an evolved UTRAN (EUTRAN), which includes EUTRAN NodeBs (eNBs). The exchange of data and signaling between the eNBs are implemented through an X2 interface. An eNB is connected to a Mobility Management Entity (MME) of an Evolved Packet Core (EPC) network through an S1 interface. An eNB is connected to a Serving Gateway (S-GW) through an S1 interface. Only packet switched domains exist in the EUTRAN, and therefore only the CKₚₛ and the IKₚₛ exist. Hereafter, if not specifically indicated, both the CK and the IK represent packet switched domain keys.

In a first scenario, a UE accesses an EUTRAN network. After authentication, the UE and the network together generate a CKₚₛ and an IKₚₛ, which are stored in a USIM in the UE. An Access Security Management Entity (ASME) root key Kasme is further derived from the CKₚₛ and the IKₚₛ, and is stored in an ME part in the UE. The ASME in the EUTRAN is an MME.

When the UE moves from the EUTRAN to a UTRAN (including a handover in an active state and mobility in an idle state), a new CKₚₛ' and a new IKₚₛ' can be derived from the root key Kₐₛₘₑ (values of the CKₚₛ' and the IKₚₛ' herein are not equal to those of the CKₚₛ and IKₚₛ). Accordingly, when the UE moves from the UTRAN to the EUTRAN, the root key Kₐₛₘₑ can also be derived from the CK and the IK.

In a second scenario, a UE accesses a UTRAN. After authentication, the UE and the network together generate a CKₚₛ and an IKₚₛ, which are stored in a USIM in the UE. The CKₚₛ and the IKₚₛ are stored in an ME part in the UE.

When the UE moves from the UTRAN to an EUTRAN, a root key Kₐₛₘₑ can also be derived from the CK and the IK.

When the UE moves from the EUTRAN to the UTRAN (including a handover in an active state and mobility in an idle state), a new CKₚₛ' and a new IKₚₛ' can be derived from the root key Kₐₛₘₑ (values of the CKₚₛ' and the IKₚₛ' herein are not equal to those of the CKₚₛ and IKₚₛ).

In the preceding two scenarios, the same KSI identifies different key pairs {CKₚₛ, IKₚₛ} and {CK_{ps'}, IK_{ps'}}, and when security parameter in a terminal, that is, security context, are reused, the preceding problem of the security context desynchronization may occur, which causes the failure of the terminal to access a network.

United States patent application publication US 2008/0096530 A1 discloses that utilizing a START value for controlling lifetime of the CK/IK. At the time of establishment of every RRC connection, the UE will trigger the generation of a new access link key set (a new CK and a new IK) if the current START value has reached the THRESHOLD value, for the corresponding core network domain(s).

### SUMMARY OF THE INVENTION

Accordingly, the present invention provides a method and a device for avoiding network security desynchronization, thereby avoiding the failure of a user to access a network due to the network security parameter desynchronization. The technical solution under the present disclosure is realized as disclosed in the independent claims.

To achieve the objectives of the present invention, the following technical solutions are provided.

According to the first aspect of the present invention a method for avoiding network security desynchronization includes in its first implementation form:
performing, by a user terminal, a network handover, and generating a new derived key through key derivation in a new network; and
modifying a security parameter stored in a USIM in the user terminal.

According to the second aspect of the present invention a device for avoiding network security desynchronization is located on a user terminal side, where the device includes:
a handover unit, configured to perform a network handover of a user terminal, and generate a new derived key through key derivation in a new network; and
a modifying unit, configured to modify a security parameter stored in a USIM in the UE after the network handover of the user terminal is completed.

According to the third aspect of the present invention a terminal for avoiding network security desynchronization is provided. The terminal includes the preceding device for avoiding network security desynchronization.

Said method for avoiding network security desynchronization includes in its second implementation form:
obtaining a new KSI according to a KSI of an original network when a network handover is performed; and
using the new KSI as a KSI of a target network.

The obtaining the new KSI includes:
receiving the KSI transferred by the original network; and
obtaining the new KSI by modifying the KSI.

The obtaining the new KSI includes:
receiving the new KSI that is sent by the original network and is obtained by modifying the KSI of the original network.

The network handover includes:
a handover of the user terminal in an active state between different networks; or
mobility of the user terminal in an idle state between different networks.

The method further includes:
notifying the user terminal of the new KSI; or
notifying the user terminal of generating a new KSI that is the same as that of a network based on a preset rule.

The KSI of the original network is modified by using the following method:
obtaining a new KSI by performing calculation according to a KSI of the original network; and/or assigning a new name of a new KSI to the KSI;
or requesting a new KSI from a network entity;
or obtaining a new KSI by performing calculation according to a preset algorithm;
or adding a field to the KSI of the original network to identify a network type.

According to the fourth aspect of the present invention a device for avoiding network security desynchronization is located on a network. The device includes:
a receiving unit, configured to receive a KSI during a network handover;
a modification unit, configured to modify the KSI; and
a notification unit, configured to send notification information to notify a new network identifier.

The modification unit further includes: an algorithm module, where the algorithm module is configured to obtain a new KSI by performing calculation according to a KSI of an original network; and/or configured to assign a new name of a new KSI to the KSI; or
configured to request a new KSI from a network entity; or
configured to obtain a new KSI by performing calculation according to a preset algorithm.

Network equipment for avoiding network security desynchronization includes any one of the preceding devices on the network for avoiding network security desynchronization.

According to the fifth aspect of the present invention a method for solving network security desynchronization includes:
matching, by a network, security parameter;
sending, by the network, start security mode command information to a terminal;
receiving, by the network, no reply message from the terminal within a predetermined time; and
initiating, by the network, a re-authentication process.

According to the sixth aspect of the present invention a device for solving network security desynchronization includes:
a receiving unit, configured to receive security parameter sent by a user terminal;
a matching unit, configured to match the received security parameter with security parameter thereof;
a sending unit, configured to send security information to the user terminal; and
an initiation unit, configured to re-initiate AKA if no reply message from the user terminal is received within a predetermined time.

In view of the above, security parameter in a user terminal (the USIM part) is processed at an appropriate time, or security parameter in both the user terminal (the ME part) and the network is processed when the user terminal performs a network handover. According to the present invention, by modifying a security parameter at an appropriate time, the failure of a terminal to access a network due to the security parameter desynchronization is effectively avoided, and network availability and security in handover-related scenarios are improved.

### BRIEF DESCRIPTION OF THE DRAWINGS

To describe the technical solutions according to the embodiments of the present invention or in the prior art more clearly, the accompanying drawings for describing the embodiments or the prior art are introduced briefly in the following.
FIG. 1 is a schematic diagram of a network structure of a UTRAN in the prior art;
FIG. 2 is a schematic diagram of a network structure of an EUTRAN in the prior art;
FIG. 3 is a schematic diagram of an intermediate process of a network handover in the prior art;
FIG. 4 is a schematic diagram of an intermediate process of a network handover in the prior art;
FIG. 5 is a schematic diagram of an intermediate process of a network handover in the prior art;
FIG. 6 is a schematic diagram of an intermediate process of a network handover in the prior art;
FIG. 7 is a flow chart of a method according to a first embodiment of the present invention;
FIG. 8 is a flow chart of a method according to a second embodiment of the present invention;
FIG. 9 is a flow chart of a method according to a third embodiment of the present invention;
FIG. 10 is a signaling view of the method according to the third embodiment of the present invention;
FIG. 11 is a flow chart of a method according to a fourth embodiment of the present invention;
FIG. 12 is a signaling view of the method according to the fourth embodiment of the present invention;
FIG. 13 is a flow chart of a method according to a fifth embodiment of the present invention;
FIG. 14 is a flow chart of a method according to a sixth embodiment of the present invention;
FIG. 15 is a signaling view of the method according to the sixth embodiment of the present invention;
FIG. 16 is a flow chart of a method according to a seventh embodiment of the present invention;
FIG. 17 is a signaling view of the method according to the seventh embodiment of the present invention;
FIG. 18 is a flow chart of a method according to an eighth embodiment of the present invention;
FIG. 19 is a signaling view of the method according to the eighth embodiment of the present invention;
FIG. 20 is schematic structural view of a device according to an embodiment of the present invention;
FIG. 21 is schematic structural view of a device according to another embodiment of the present invention;
FIG. 22 is schematic structural view of a device according to another embodiment of the present invention;
FIG. 23 is a signaling view of a method according to a ninth embodiment of the present invention;
FIG. 24 is a signaling view of a method according to a tenth embodiment of the present invention; and
FIG. 25 is a signaling view of a method according to an eleventh embodiment of the present invention.

### DETAILED DESCRIPTION OF THE EMBODIMENTS

To make the objectives, technical solutions, and advantages of embodiments of the present invention more comprehensible, the embodiments of the present invention are described in further detail below.

The handover mentioned in embodiments of the present invention includes mobility of a UE in an idle state (idle mobility) and a handover of a UE in an active state (active handover).

In the following, two typical examples are provided to describe the scenarios of security parameter desynchronization between a UE and a network.

In a first scenario, a UE at first completes initial AKA in an EUTRAN. When the UE moves from the EUTRAN to a UTRAN, a CK and an IK used in the UTEAN are derived from a Kasme used in the EUTRAN.

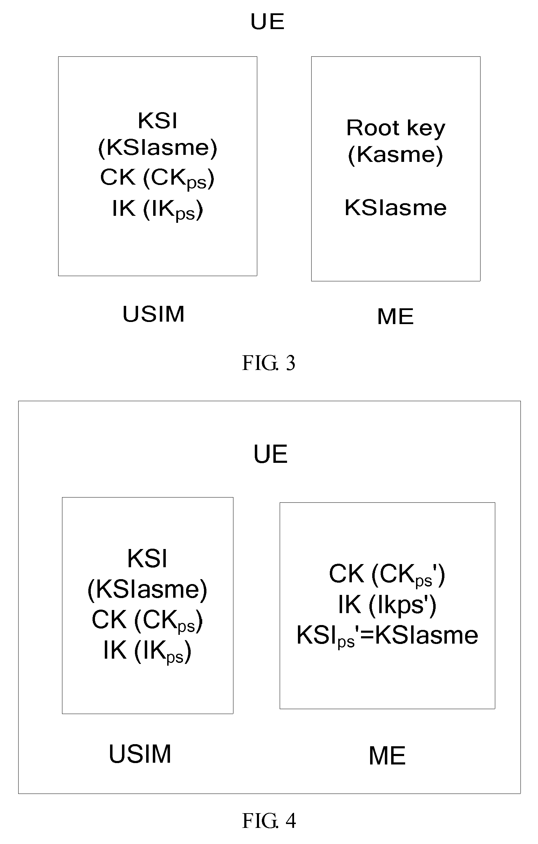

At first, the UE is in the EUTRAN. After the initial AKA, a CKₚₛ, an IKₚₛ, and a KSIasme, i.e. key set identifier of a Kasme are generated. An ME also stores the KSIasme and the Kasme, as shown in FIG. 3.

According to the prior art, if a UE is in a UTRAN, after AKA, the situation in which the CKₚₛ and the IKₚₛ are stored in a USIM, which is similar to that shown in FIG. 3 may also occur, or, other CKₚₛ and IKₚₛ, such as those derived during a network handover may also be stored in the USIM.

When the UE moves from a packet-based network of the EUTRAN to a packet-based network of the UTRAN, the Kasme stored in the ME needs to be used to generate a new CKₚₛ' and a new IKₚₛ', and the ME also stores the KSI, where KSI = KSIasme, as shown in FIG. 4.

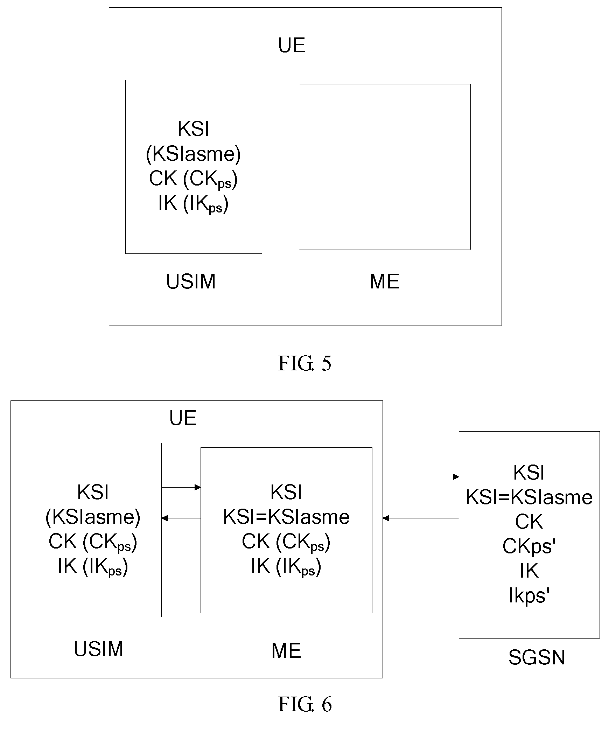

After the UE moves from the EUTRAN to the UTRAN, if the ME is suddenly powered off (which is similar to removal of a battery from a mobile phone), at the moment, an SGSN on the network still temporarily stores old security key parameters in the ME, that is, the KSI, the CKₚₛ', and the IKₚₛ'. Security key stored in the ME have been completely cleared because of the power-off, while the old KSIasme, CKₚₛ and IKₚₛ are still stored in the USIM, as shown in FIG. 5.

When the user switches on again and the UE is powered on, the ME reads security parameters stored in the USIM, which include the CKₚₛ, the IKₚₛ, and the KSI. At that moment, the SGSN on the network still stores the old security parameters in the ME, that is, the CKₚₛ', the IKₚₛ', and the KSI, as shown in FIG. 6.

In the prior art, when the UE is switched on again and attaches to the UTRAN, during the establishment of security context, the ME sends the KSI to the SGSN, and the SGSN compares the received KSI with the KSI stored by the SGSN, and if they are the same, it is regarded that the ME and the SGSN store the same CK and IK. No new AKA process is required. During research, the inventors find that, in fact, in the situation shown in FIG. 6, the CKₚₛ and the IKₚₛ used by the UE in an EUTRAN system are stored in the ME, and the CKₚₛ' and the IKₚₛ' derived from the Kasme in an MME when the handover from the EUTRAN to the UTRAN is performed are stored in the SGSN, which causes that the same KSI actually identifies the different key pairs {CKₚₛ, IKₚₛ} and {CKₚₛ', IKₚₛ'} in the ME and on the network. Because the IKs and the CKs stored in the ME and the SGSN are different, the security parameter desynchronization may cause the failure of the UE to access the network.

In a second scenario, a UE moves from an original network to an EUTRAN, and then moves from the EUTRAN to a UTRAN. The original network may be a Global System for Mobile communications (GSM) network or a UTRAN. When the initial authentication (AKA) is performed on the UE at first in the UTRAN, a USIM stores security context of the UE in the UTRAN, the security context includes a CKₚₛ, an IKₚₛ, and a KSI.

When the UE moves from the UTRAN to the EUTRAN, a Kasme of the UE in the EUTRAN needs to be derived according to the CKₚₛ and the IKₚₛ stored in the USIM. At the moment, the USIM stores the CKₚₛ, the IKₚₛ, and the KSI, and the ME stores the KSI and the Kasme, which is similar to the result of performing the AKA on the UE directly in the EUTRAN in the first scenario as shown in FIG. 3.

After the UE moves from the EUTRAN to the UTRAN, the CKₚₛ' and the IKₚₛ' are further derived from the Kasme, and the KSI does not change. If the ME is suddenly powered off (similar to removal of a battery), at the moment, an SGSN on the network still temporarily stores the old security key parameters in the ME, that is, the KSI, the CKₚₛ', and the IKₚₛ'. Security key stored in the ME have been completely cleared because of the power-off, while the old KSIasme as well as CKₚₛ and IKₚₛ are still stored in the USIM. The process is similar to that in the first scenario, and the result is shown in FIG. 5.

When the user switches on again, the UE is powered on, and at the moment, the ME reads security parameters stored in the USIM, which include the CKₚₛ, the IKₚₛ, and the KSI. At the moment, the SGSN on the network still stores the old security parameters in the ME, that is, the CKₚₛ', the IKₚₛ', and the KSI, as shown in FIG. 6.

In the same situation as that of the first scenario, when the UE is switched on again and attaches to the UTRAN, during the establishment of security context, the ME sends the security KSI to the SGSN, the SGSN compares the received KSI with the KSI stored by the SGSN, and if they are the same, it is regarded that the ME and the SGSN store the same CK and IK. No new AKA process is required. In fact, in the situation shown in FIG. 6, the CKₚₛ and the IKₚₛ are stored in the ME, and the CKₚₛ' and the IKₚₛ' derived from the Kasme in an MME when a handover from the EUTRAN to the UTRAN is performed are stored in the SGSN. The IKs and the CKs stored in the ME and the SGSN are different, so that the network security parameter desynchronization may cause the failure of the UE to access the network.

Similarly, after the initial AKA is performed on the UE at first in a GSM network, the USIM stores security parameter of the initial AKA of the GSM. Then, the UE moves to the EUTRAN, and key derivation is performed. When the UE again moves from the EUTRAN to the UTRAN or the GSM network, the ME is powered off, and then the UE is switched on. The principle that the network security parameter desynchronization causes the failure of the UE to access the network is the same as that in the second scenario.

The scenarios provided above are intended to illustrate the following: when a terminal is in the network, the same KSI identifies different key pairs {CKₚₛ, IKₚₛ} and {CK_{ps'}, IKₚₛ'}, when the security parameter in the terminal, that is, the security context, are reused, the preceding problem of security context desynchronization may occur, which causes the failure of the terminal to access the network. In addition to the foregoing scenarios, all scenarios that potentially cause the same KSI to identify the different key pairs {CKₚₛ, IKₚₛ} and {CK_{ps'}, IK ₚₛ'} may also cause the security context desynchronization, and will not be described herein one by one.

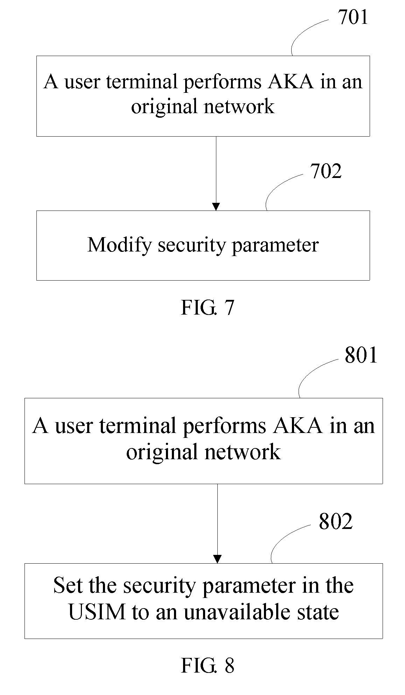

FIG. 7 shows a first embodiment of the present invention. In the embodiment, the implementation of a method for avoiding network security desynchronization according to the embodiment of the present invention includes the following steps:
In step 701, a user terminal performs AKA in an original network (such as an EUTRAN).

The original network is the EUTRAN. After the AKA process, a CKₚₛ, an IKₚₛ, a Kasme, and KSIasme are generated. The CKₚₛ, IKₚₛ, and KSIasme are stored in a USIM. An ME stores the same KSIasme as that in the USIM.

In step 702, modify a security parameter.

Preferably, after step 702, the method further includes the following step:
Re-trigger the AKA, and generate new security parameter information.

In different embodiments, the security parameter may be modified in different manners. Embodiments of the present invention are described in detail in the following with reference to the different manners.

In a second embodiment, security parameter is modified by setting the security parameter in a USIM to an unavailable state. The unavailable state refers to that the security parameter is made unavailable by modifying the security parameter in the USIM. Referring to FIG. 8, the embodiment includes the following steps:
In step 801, a user terminal performs AKA in an original network.
The original network is an EUTRAN, a UTRAN, or a GSM network.

When a UE is in the EUTRAN, after the AKA process in the original network, a CKₚₛ, an IKₚₛ, a Kasme, and a KSI or a KSIasme are generated. The CKₚₛ, IKₚₛ, Kasme, and KSIasme are stored in a USIM. An ME also stores the same KSIasme and Kasme as those in the USIM.

When the UE is in a UTRAN, after an AKA process in the UTRAN, a CKₚₛ, an IKₚₛ, and a KSI are generated, which are stored in an ME. When the ME sends an instruction to the USIM to request the USIM to store security parameter, the USIM may store the CKₚₛ, IKₚₛ, and KSI.

In step 802, set the security parameter in the USIM to an unavailable state.

The security parameter in the USIM can be set to the unavailable state in many manners, which include by using the method of setting a START value in the USIM to a threshold, the method of setting the KSI to 111, or by using the method of deleting the CK and the IK. The detailed description is provided below through embodiments to describe each manner.

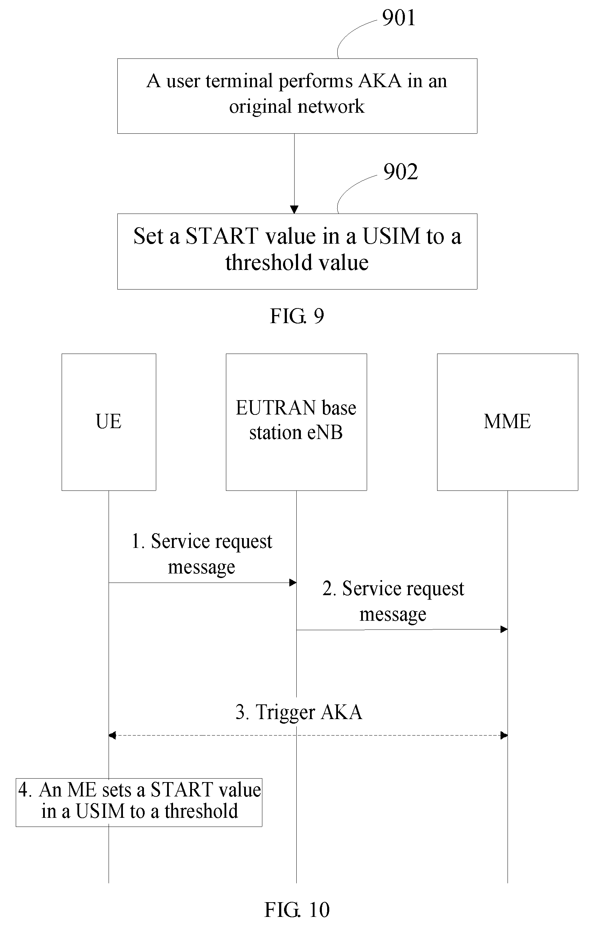

In a third embodiment, a USIM is made unavailable by changing a START value in the USIM. Referring to FIG. 9, the embodiment includes the following steps:
In step 901, a user terminal performs AKA in an original network.

In step 902, set a START value of a USIM to a threshold value.

Or, delete a CK and an IK.

Or, set a KSI to 111.

FIG. 10 is a signaling flow chart corresponding to an example provided in this embodiment. In the FIG. 10, a UE is in an EUTRAN, and the steps are as follows:
In steps 1-2, The UE is in the EUTRAN, and the UE sends a service request message to an MME through an eNB.
In step 3, the MME does not have security parameter in the UE, an AKA process is triggered, and the UE and the MME generate a root key Kₐₛₘₑ.
In step 4, on the UE, an ME sets a START value in a USIM to a threshold.

When the START value of the USIM is set to the threshold value, the CK and the IK can no longer be used (or, the CK and the IK are deleted). When a user terminal (the ME part) is powered off and on again, the ME reads security parameter from the USIM. When the network receives an attach request (carrying a KSI) from the user terminal, and checks that the original CK and IK corresponding to the KSI are unavailable (or, because the CK and the IK have been deleted, the user terminal cannot carry the KSI in the attach request), the network makes the judgment and triggers a new authentication process, and the situation of the network security desynchronization does not occur.

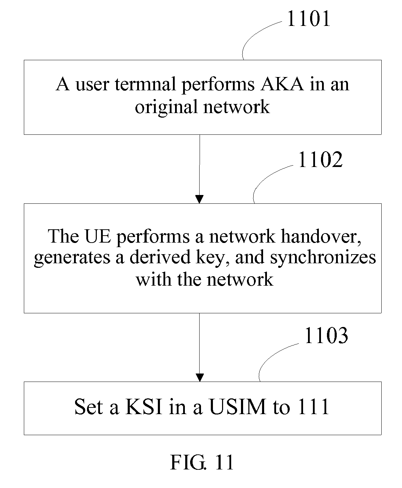

In a fourth embodiment, when a user terminal performs handover in networks, and after the user terminal performs key derivation, (for example, the user terminal hands over from an EUTRAN to a UTRAN, in a ME part of the user terminal and in the network, a CKₚₛ' and an IKₚₛ' are derived from a Kasme, security parameter in a USIM are made unavailable by setting the key in the USIM to unavailable (including setting a KSI to 111, and/or setting a START value in the USIM to a threshold, and/or deleting an original CKₚₛ and an original IKₚₛ in the USIM). Referring to FIG. 11, the embodiment includes the following steps:
In step 1101, a user terminal performs AKA in an original network.

The AKA process is basically the same as that in the preceding embodiments, and therefore is not described herein again.

In step 1102, the user terminal performs a network handover, generates a derived key, and synchronizes with the network.

After the network handover of the user is successful, information in an SGSN on the network is synchronized with information in an ME. The SGSN stores security parameters in the ME, that is, a CKₚₛ', an IKₚₛ', and a KSI.

In step 1103, set a KSI in a USIM to 111.

The KSI may be a number, occupying 3 bits, that is, 7 values are used to identify the KSI. The value 111 may be used by a terminal to indicate that the Kasme is invalid if a KSIasme is set to 111, or the value 111 may be used by a terminal to indicate that the CK and IK are invalid if the KSI may is set to 111.

The KSI in the USIM is set to 111, it indicates that currently no CKₚₛ' or IKₚₛ' is available, so that in the subsequent process (such as a user terminal is switched on again, or a user terminal performs network handover), a new AKA process is triggered, and new security parameter are established.

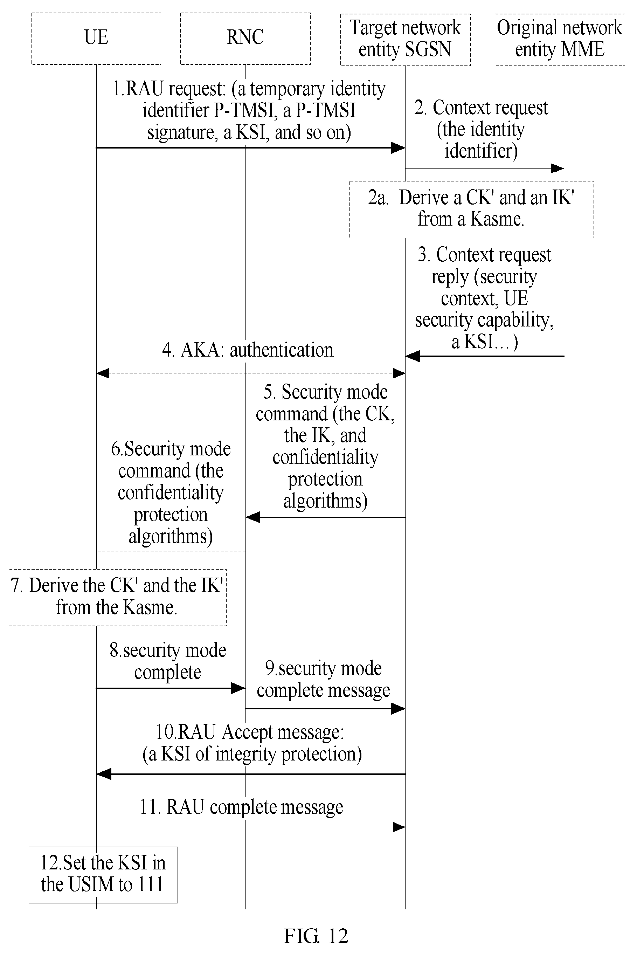

FIG. 12 is a signaling flow chart of an example provided in the embodiment. In FIG. 12, a UE is handovered from a packet-based network of an EUTRAN to a packet-based network of a UTRAN. Referring to FIG. 12, the following steps are included.

In step 1, a UE sends a routing area update (RAU) request to a target SGSN, where the RAU request carries a KSI and a temporary identity identifier, and so on that are stored by the UE.

In step 2, the target SGSN requests security parameter from an original MME, and the request carries the temporary mobile subscriber identity (TMSI) identifier obtained from the UE.

In step 2a, the original MME performs key derivation, a CKₚₛ' and an IKₚₛ' are derived from a Kasme.

In step 3, the SGSN obtains the security parameters sent by the MME, where the security parameters include the derived CKₚₛ' and IKₚₛ', and a new KSI.

In step 4, optionally, if the KSI sent from the UE in step 1 is 111 or due to other requirements, trigger a new AKA process. A new KSI may also be generated.

In step 5, the SGSN sends a security mode command, including the derived CKₚₛ' and IKₚₛ' obtained from the original MME, and universal mobile telecommunications system (UMTS) encryption algorithms (UEAs) and UMTS integrity algorithms (UIAs) allowed by the SGSN.

In step 6, an RNC selects a final UEA and a final UIA, and sends the security mode command to the UE.

In step 7, the UE derives the CKₚₛ' and IKₚₛ' from the Kasme.

In step 8, the UE sends a security mode complete message.

In step 9, the RNC transfers the security mode complete message to the SGSN.

In step 10, the SGSN sends an RAU accept message (with integrity protection) to the UE, which carries the new KSI obtained in step 2b.

In step 11, the UE receives the RAU accept message, and returns an RAU complete message to the SGSN.

In step 12, after the handover is completed, set the KSI in the USIM to 111.

When the user switches on again, and the network detects that the KSI sent by the UE is 111, and/or the UE cannot send the KSI, an AKA process is triggered to generate a new key, so that the network security desynchronization is avoided.

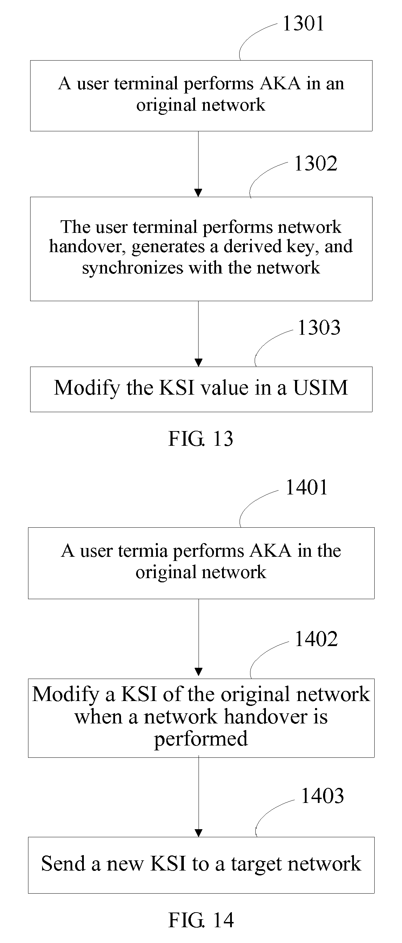

In a fifth embodiment, referring to FIG. 13, a KSI in a USIM is modified, and the embodiment includes the following steps:
In step 1301, a user terminal performs AKA in an original network.

The AKA process is the same as that in all the preceding embodiments, and therefore is not described herein again.

In step 1302, the user terminal performs network handover, generates a derived key, and synchronizes with the network.

After the network handover of the user terminal is successful, information in an SGSN on the network is synchronized with information in an ME. The SGSN stores security parameters in the user terminal, that is, a CKₚₛ', an IKₚₛ', and a KSI.

In step 1303, modify the KSI in a USIM.

The KSI in the USIM can be modified by multiple methods, such as by setting KSI = KSI + 1.

After the user terminal is handovered from an EUTRAN to a UTRAN, if the user terminal is powered off, when the user terminal is switched on again, the ME sends a user identifier including a KSI to the network, and the network checks the KSI by comparison.

The SGSN on the network stores the KSI in the ME when the network interworking is completed. After the network interworking is completed, the KSI in the UTRAN is modified. For example, the KSI may be set to KSI', where KSI' = KSI + 1. If the UE is powered off, security key stored in the ME is lost because of the power-off. When a user terminal is switched on, the ME reads information in the USIM, where the information is the KSI'. Therefore, the KSI' sent by the user terminal is different from the KSI on the network, and it is regarded that no available CK or IK exists, and the USIM is in an unavailable state. Then, an AKA process is re-triggered. The failure of the user terminal to access the network due to the security parameter desynchronization is avoided.

In the actual application, the security parameter may also be modified by modifying a KSI of the network, which includes the following steps:
A user terminal performs AKA in an original network.

During a network handover, obtain a new KSI according to a KSI of the original network.

Use the new KSI as the KSI of a target network.

The obtaining of the new KSI according to the KSI of the original network further includes: receiving a KSI transferred by the original network, and modifying the KSI, or receiving a new KSI obtained by modifying the KSI of the original network.

In a sixth embodiment, referring to FIG. 14, network security desynchronization is avoided by modifying a KSI of an original network. The embodiment includes the following steps:
In step 1401, a user terminal performs AKA in the original network.
In step 1402, when a network handover is performed, modify the KSI of the original network.
In step 1403, send a new KSI to a target network.

The KSI on the network is modified by using the following method.

A new KSI is obtained by performing calculation according to the KSI.

And/or, a new name of a new KSI is assigned to the KSI.

Or, a new KSI is requested from a network entity.

Or, a new KSI is obtained by performing calculation according to a preset algorithm.

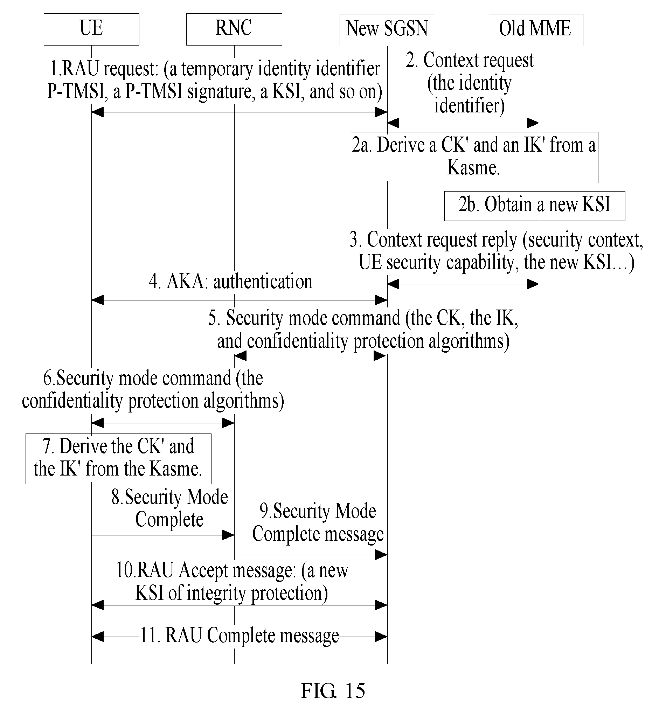

FIG. 15 is a signaling flow chart of an example provided in this embodiment. The original network is an EUTRAN. The target network is a UTRAN. The steps are as follows.

In step 1, a UE sends an RAU request to a target SGSN, the RAU request carries a KSI, a temporary identity identifier, and so on that are stored by the UE.

In step 2, the target SGSN requests security parameter from an original MME, and the request carries the TMSI identifier obtained from the UE.

In step 2a, the original MME performs key derivation, and a CKₚₛ' and an IKₚₛ' are derived from a Kasme.

In step 2b, the original MME obtains a new KSI.

The new KSI is generated by the original MME, such as the new KSI may be generated based on an old KSI in a message 1, for example, new KSI = old KSI + 1; or, the new KSI may be generated by performing calculation according to a default algorithm; or, the new KSI may be generated based on a normal AKA process.

In other embodiments, the new KSI is requested by the original MME from a network entity, such as a Home Subscriber Server (HSS).

The original MME may also assign a new name, such as KSI_{new} or KSI_{UTRAN}, to the new KSI. Unlike the KSI used in the EUTRAN, it is the KSI_{UTRA} that is used in the target network, and the KSI_{new} of the new KSI may be equal or unequal to a KSI_{old} of the KSI of the original system.

In other embodiments, a field may also be added to a KSI to indicate which network type the KSI of security parameter belongs to. For example, 2 bits are added to identify the network type corresponding to the KSI, with 01 identifying a GSM network, 10 for identifying a UTRAN, and 11 identifying an EUTRAN. Therefore, for a same KSI (3-bit), such as 110, when the network type is added, the actual KSIs in the GSM network, the UTRAN, and an Evolved Packet System (EPS) network are: 01110, 10110, and 11110. During an handover between different types of networks, the UE and the network do not modify the old KSI whose length is 3 bits according to network type information, and instead add different network type identifiers to the old KSI.

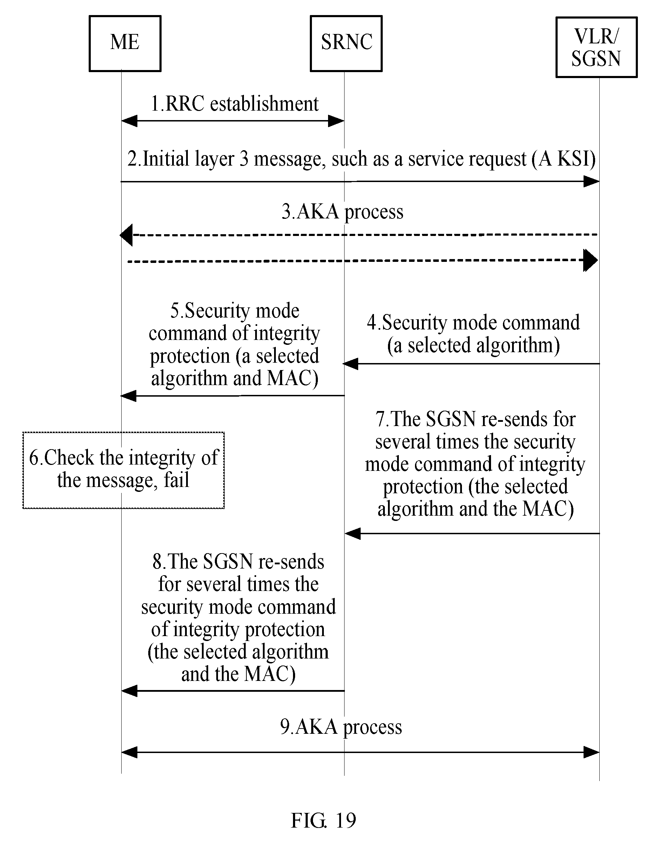

When a UE initiates a layer 3 message (such as an attach message or a service request message), where the layer 3 message carries a KSI with a network type identifier (corresponds to the scenario already described in the BACKGROUND OF THE INVENTION, or the FIG. 19), the network can judge that the KSIs (added with the network type value, and being 5-bit) on the two sides are not consistent, and a new AKA process is triggered to avoid network security context desynchronization.

In step 3, the SGSN obtains security parameter sent by the MME, which includes the derived CKₚₛ' and IKₚₛ', and the new KSI.

In step 4, optionally, if the KSI sent from the UE in step 1 is 111 or due to other requirements, a new AKA process is triggered. A new KSI may also be generated.

In step 5, the SGSN sends a security mode command, including the derived CKₚₛ' and IKₚₛ' obtained from the original MME, and UEAs and UIAs allowed by the SGSN.

In step 6, an RNC selects a final UEA and a final UIA, and sends the security mode command to the UE.

In step 7, the UE derives the CKₚₛ' and the IKₚₛ' from the Kasme.

In step 8, the UE sends a security mode complete message.

In step 9, the RNC transfers the security mode complete message to the SGSN.

In step 10, the SGSN sends an RAU accept message (with integrity protection) to the UE, the RAU accept message carries the new KSI obtained in step 2b.

In step 11, the UE receives the RAU accept message, and returns an RAU complete message to the SGSN.

Based on the preceding solution, no matter whether the key used in a UTRAN system after the handover is derived from the key Kₐₛₘₑ of the original system or the key is obtained from a new AKA process, a new KSI is generated.

Therefore, after the handover, the new KSI is unequal to the Kₐₛₘₑ stored in the USIM of the UE. If at the moment, the UE is powered off in the UTRAN, the key in an ME are cleared.

When the UE is switched on again, the ME reads the CK, IK, and Kₐₛₘₑ from the USIM. The SGSN still stores the CKₚₛ', IKₚₛ', and KSI after key derivation. But the KSI is unequal to Kₐₛₘₑ, and therefore the security desynchronization does not occur. Instead, a new AKA process is triggered.

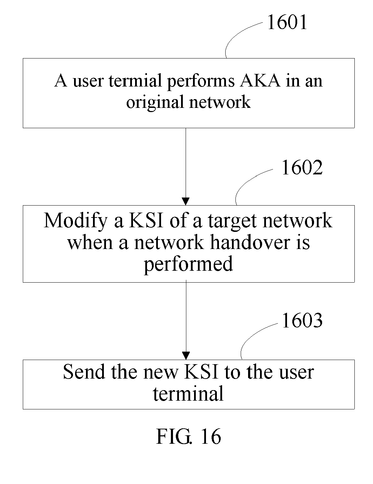

In a seventh embodiment, security parameter are modified by modifying a KSI of a network. Referring to FIG. 16, the embodiment includes the following steps:
In step 1601, a user terminal performs AKA in an original network.
In step 1602, when a network handover is performed, modify a KSI of a target network.

The entity that performs generation of a new KSI may be a network element of the original network (such as an MME) or a network element of the target network (such as an SGSN).

The KSI on the network is modified by using the following method.

A new KSI is obtained by performing calculation according to the KSI.

And/or, a new name of a new KSI is assigned to the KSI.

Or, a new KSI is requested from a network entity.

Or, a new KSI is calculated based on a preset algorithm.

In step 1603, the user terminal obtains the new KSI.

The network notifies the user terminal of the new KSI, or the user terminal calculates the new KSI locally based on the same calculation strategy (for example, the same algorithm) as that of the network, and based on the KSI.

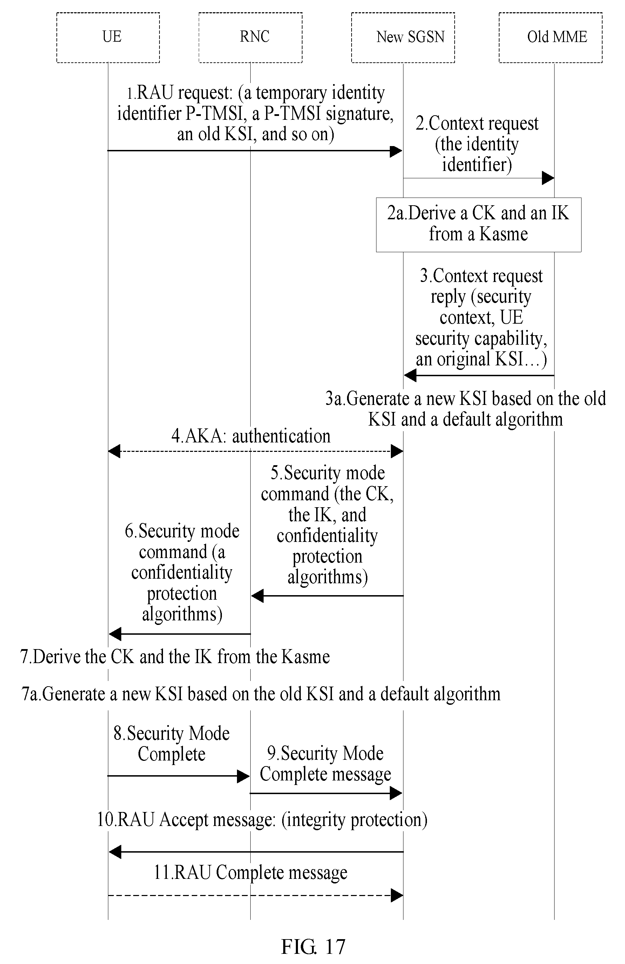

FIG. 17 is a signaling flow chart of an example provided in an embodiment of the present invention, which includes the following steps:
In step 1, a UE sends an RAU request to a target SGSN, the RAU request carries a KSI, a temporary identity identifier, and so on that are stored by the UE.
In step 2, the target SGSN requests security parameter from an original MME, and the request carries the TMSI identifier obtained from the UE.
In step 2a, the original MME performs key derivation, and a CKₚₛ' and an IKₚₛ' are derived from a Kasme.
In step 3, the SGSN obtains security parameters sent by the MME, the security parameters include the derived CKₚₛ' and IKₚₛ', and a KSI.
In step 3a, generate a new KSI based on the old KSI and a default algorithm. Or the target SGSN may also assign a new name, such as KSI_{new} or KSI_{UTRAN}, to the new KSI (the new name is different from a name of the old KSI that is used in an EUTRAN, the KSI_{UTRAN} is used in the target network).
In step 4, optionally, if the KSI sent from the UE in step 1 is 111 or due to other requirements, a new AKA process is triggered. A new KSI may also be generated.
In step 5, the SGSN sends a security mode command, including the derived CKₚₛ' and IKₚₛ' obtained from the original MME, and UEAs and UIAs allowed by the SGSN.
In step 6, an RNC selects a final UEA and a final UIA, and sends the security mode command to the UE.
In step 7, the UE derives the CKₚₛ' and the IKₚₛ' from the Kasme.
In step 7a, generate a new KSI based on the old KSI and a default algorithm.
In step 8, the UE sends a security mode complete message.
In step 9, the RNC transfers the security mode complete message to the SGSN.
In step 10, the SGSN sends an RAU accept message (with integrity protection) to the UE, the RAU accept message carries the new KSI obtained in step 2b.
In step 11, the UE receives the RAU accept message, and returns an RAU complete message to the SGSN.

The effect of the method embodiment is the same as the embodiment illustrated in FIG. 15, and therefore is not described herein again.

In the sixth and seventh embodiments, the scenarios of the "handover" of a user terminal in the idle state (idle mobility) are illustrated. The method for implementing a handover of a user terminal in an active state (an active handover) can be analogized, and will not be described herein.

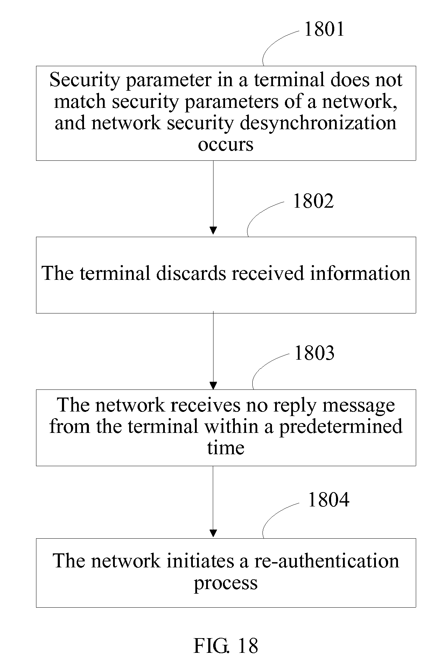

In an eighth embodiment, for network security desynchronization that already occurs, a remedial method is provided. As shown in FIG. 18, the method includes the following steps:
In step 1801, security parameter in a terminal does not match security parameter of a network, and network security desynchronization occurs.
In step 1802, the terminal discards received information.
In step 1803, the network receives no reply message from the terminal within a predetermined time.
In step 1804, the network initiates a re-authentication process.

FIG. 19 is a signaling flow chart according to the embodiment of the present invention. The following steps are included:
In step 1, a Mobile Station (MS) of a user initiates an attach request, and a radio resource control (RRC) connection is established between the MS and a serving radio network controller (SRNC).
In step 2, the MS sends an attach request message to an SGSN, and the request message carries a KSI that already exists in the MS.
In step 3, the network compares a KSI' corresponding to a CK and an IK locally stored, with the received KSI, and checks that the two KSIs are the same, and thus it is regarded that the network and the terminal store the same CK and IK. Old security parameter may be used, and no new AKA authentication process is required.
In step 4, the SGSN delivers a security mode command, the security mode command is integrity protected with the IK (the IK is stored by the network, and the network ensures that the terminal has the same IK).The security mode command includes which security algorithms to be used, the start time of encryption and the integrity protection, and a calculated message authentication code (MAC) value of the integrity protection.
In steps 5-6, when a UE receives the security mode command, an IK' in the terminal is first used to perform an integrity check on the security mode command. However, because in fact the IK is not equal to the IK', an MAC' calculated by the terminal with the IK' is not equal to the MAC value carried in the security mode command. The terminal checks the security mode command integrity failed, and thereby the terminal discards the security mode command.
In steps 7-8, because the network receives no reply, the network repeatedly sends the security mode command within a certain period of time until timeout.
In step 9, a re-authentication AKA process is initiated.

With the method provided in this embodiment, the network security desynchronization is avoided.

In an embodiment, the present invention further provides a method for solving network security desynchronization, which includes the following steps:
A network matches security parameters.

The network sends start security mode command information to a terminal.

The network receives no reply message from the terminal within a predetermined time.

The network initiates a re-authentication process.

With the method provided in the embodiment of the present invention, the problem of network security desynchronization can be solved.

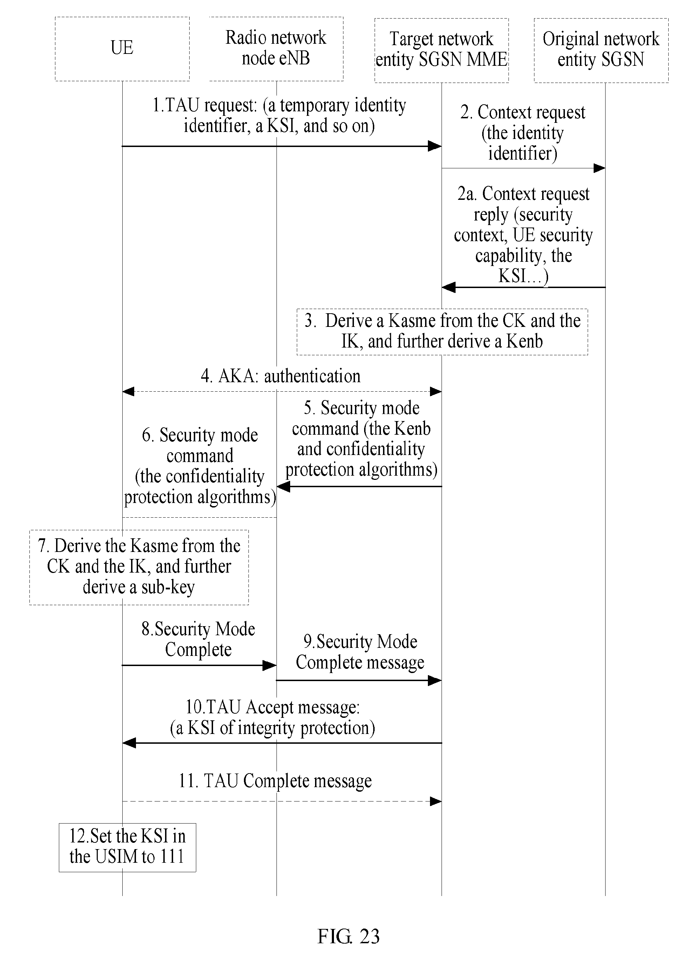

In a ninth embodiment, in an idle state, referring to a signaling flow chart in FIG. 23, a UE first stays in a UTRAN, and an AKA process is completed. After the AKA is performed in the UTRAN, a USIM stores a CKₚₛ and an IKₚₛ relevant to network security context of UTRAN, and a KSI. When the UE moves from the UTRAN to an EUTRAN, the method includes the following steps:
In step 1, a UE sends a TAU request to a target MME, the TAU request carries a KSI, a temporary identity identifier, and so on that are stored by the UE.
In step 2, the target MME requests security parameter from an original SGSN, and the request carries the temporary identity identifier obtained from the UE.
In step 2a, the MME obtains the security parameters sent by the SGSN. The security parameters include a CKₚₛ, an IKₚₛ, and a KSI.
In step 3, the target MME performs key derivation, a Kasme, and sub-layer keys K_{NASenc}, K_{NASint}, and Kenb are derived from the CKₚₛ and the IKₚₛ.
In step 4, an AKA process is triggered.
In step 5, the MME sends a security mode command, the security mode command includes the derived key Kenb obtained from the MME and a Non-Access Stratum (NAS) encryption algorithm and a NAS integrity protection algorithm selected by the MME.
In step 6, an eNB selects an Access Stratum (AS) encryption algorithm and an AS integrity protection algorithm, and sends the security mode command to the UE.
In step 7, the UE derives the Kasme and a sub-layer key thereof from the CKₚₛ and the IKₚₛ.
In step 8, the UE sends a security mode complete message.
In step 9, the eNB transfers the security mode complete message to the MME.
In step 10, the MME sends a TAU accept message (with integrity protection) to the UE.
In step 11, the UE receives the TAU accept message, and returns a TAU complete message to the MME.
In step 12, the UE sets a KSI in a USIM to an invalid value "111".

In this embodiment, the KSI in the USIM is set to 111, it indicates that currently no CKₚₛ' or IKₚₛ' is valid, so that in the subsequent process (such as the UE is switched on again, or the UE performs a handover between networks), a new AKA process is triggered, and new security parameter are established. For example, after a UE moves from an EUTRAN to a UTRAN, a new key CKₚₛ' and a new key IKₚₛ' are derived in an ME. When the UE is in the UTRAN, the ME is powered off. When the ME is powered on again, because the USIM does not have security parameter, a layer 3 message (as shown in FIG. 19) sent by the UE does not carry a KSI. When the network detects that the UE does not carry a security context identifier, a new AKA process is triggered. Thus, the security context desynchronization described in the BACKGROUND OF THE INVENTION is avoided.

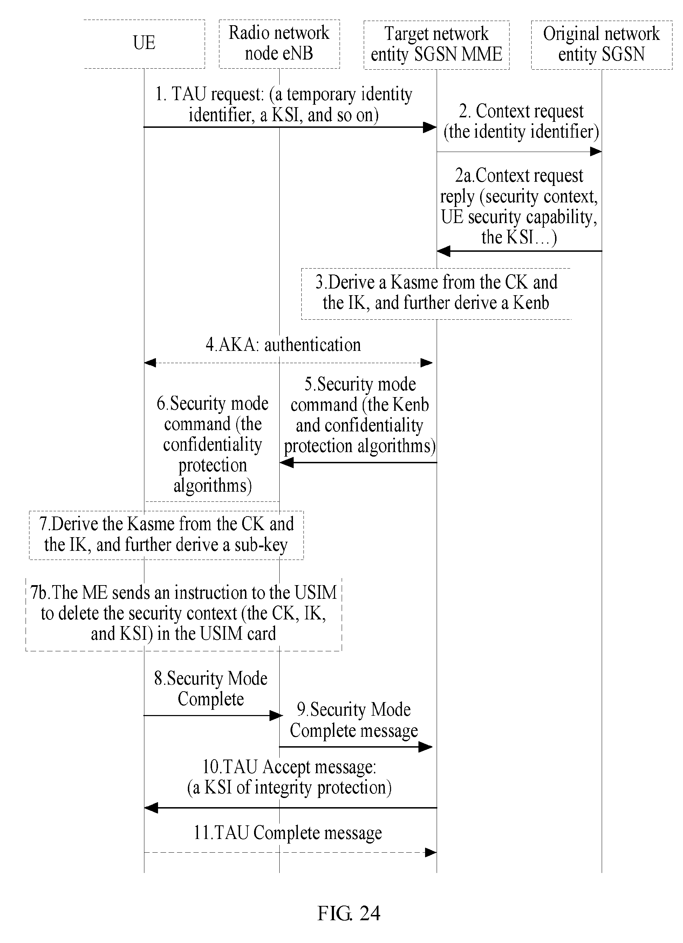

For a tenth embodiment, please refer to a signaling flow chart in FIG. 24. On the basis of the ninth embodiment, step 7b is added. In step 7b, after the UE receives the security mode command, and the key derivation is performed, the ME sends an instruction to the USIM to delete the security parameters (the CK, IK, and KSI) in the USIM.

Preferably, the step of deleting the security parameter in the USIM may also precede step 7.

Therefore, when the UE moves to the UTRAN, and when the UE is powered off and switched on again, because the security parameter in the USIM is already deleted, the KSI reported by the UE is "111". After the network reads the KSI, a new AKA process is triggered. The security context desynchronization is avoided.

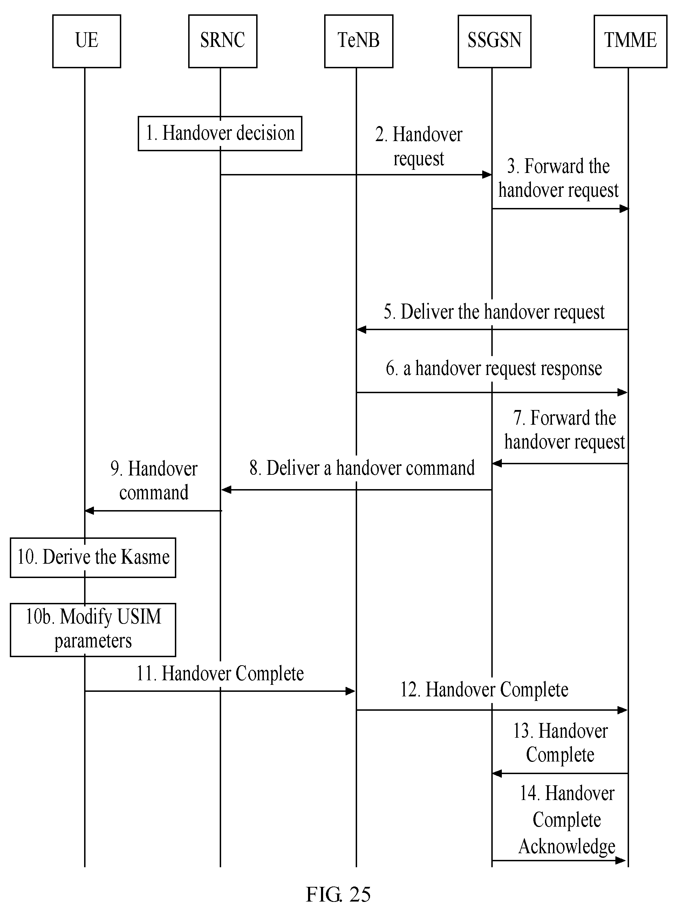

In the tenth embodiment and the ninth embodiment, the scenarios of the "handover" of a user terminal in the idle state (idle mobility) are illustrated. The method for implementing a handover of a user terminal in an active state (an active handover) can be analogized. Referring to FIG. 25, in an eleventh embodiment, a handover process of a UE in an active state (an active handover) is described, which includes the following steps:
In step 1, an original RNC sends a handover decision (for example, by analyzing a measurement report).
In step 2, the RNC sends a handover request to an SGSN.
In step 3, the SGSN forwards the handover request to a target MME, and meanwhile security parameter of an original system is carried in the handover request.
In step 4, the target MME derives a Kasme according to the security parameters CK and IK of the original system, and further calculates a sub-layer key.
In step 5, the target MME delivers the handover request to a target eNB.
In step 6, the eNB sends a handover request response to the MME.
In step 7, the target MME forwards the handover request response to the original SGSN.
In step 8, the original SGSN sends a handover command to the RNC.
In step 9, the RNC sends the handover command to the UE.
In step 10, the UE receives the handover command, and derives the Kasme from the CK and the IK.
In step 10b, modify parameters in the USIM, which includes: sending, by an ME, an instruction to the USIM to request deletion of the security parameters CK and IK in the USIM, or setting a KSI in the USIM to an invalid value "111 ".
In step 11, the UE sends a handover complete message to the eNB.
In step 12, the eNB sends the handover complete message to the MME.
In step 13, the MME forwards the handover complete message to the SGSN.
In step 14, the SGSN returns a handover complete acknowledge message to the MME.
In the preceding steps, a process of processing the security parameter in the USIM is added in step 10b. Step 10b may also be performed between step 9 and step 10, which is not described herein again. Beneficial effects of the eleventh embodiment are similar to those of the ninth and tenth embodiments, and will not be repeated herein.

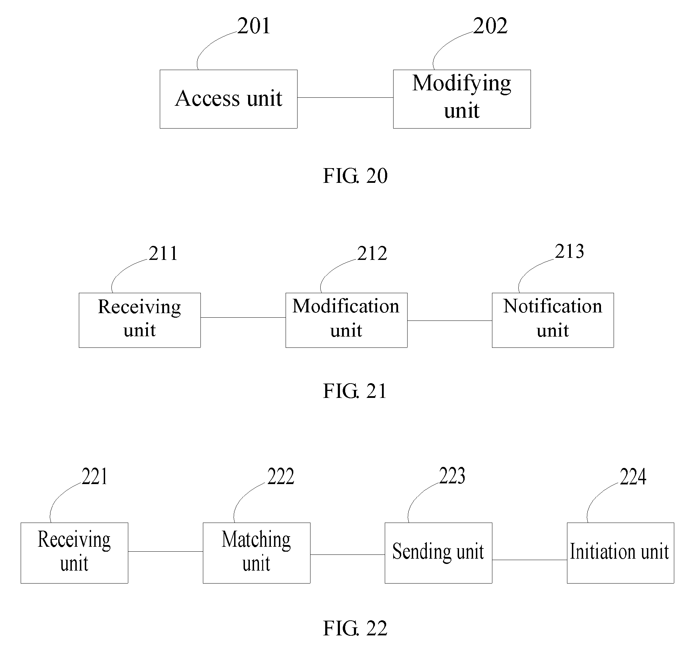

Corresponding to the method embodiments, in this embodiment, the present invention further provides a device for avoiding network security desynchronization. As shown in FIG. 20, the device is located on a user terminal side, and includes an access unit 201 and a modifying unit 202.

The access unit 201 is configured to access an original network, and perform AKA in the original network.

The modifying unit 202 is configured to set security parameter in a USIM to an unavailable state.

Preferably, the modifying unit includes a first modifying unit, a second modifying unit, a third modifying unit, or a fourth modifying unit.

The first modifying unit is configured to set a START value of the USIM to a threshold value.

The second modifying unit is configured to set a KSI in the USIM to 111.

The third modifying unit is configured to modify the KSI in the USIM.

The fourth modifying unit is configured to delete a CK and an IK in the USIM.

By modifying the security parameter in the USIM in a terminal, the security parameter in the USIM is no long used (for example, the CK and the IK are deleted). When the terminal (an ME part) is powered off and on again, the ME reads the security parameter from the USIM, but at the moment, no security parameter is available. A new authentication process is triggered, and the situation of network security desynchronization does not occur.

Preferably, the device further includes a sending unit, configured to send a KSI modified by the modifying unit to the network for security parameter comparison.

When a user logs in to a network, the modified KSI is sent to the network for security parameter comparison. If inconsistency is checked during the comparison, a new authentication process is triggered, and the situation of security desynchronization does not occur either.

In an embodiment, the present invention further provides a terminal for avoiding network security desynchronization. The terminal includes any one of the preceding devices on the terminal side for avoiding network security desynchronization.

Referring to FIG. 21, in an embodiment, the present invention provides a device for avoiding network security desynchronization, the device is located on the network, and the device includes a receiving unit 211, a modification unit 212, and a notification unit 213.

The receiving unit 211 is configured to receive a KSI during a network handover.

The modification unit 212 is configured to modify the KSI.

The notification unit 213 is configured to send notification information to notify a new network identifier.

With the device provided in this embodiment, the network receives the KSI and modifies the KSI.

When the network is an original network, and when a network handover is performed, a modified KSI is sent to a target network through the notification unit, and the target network uses the received KSI as a new KSI.

When the network is a target network, a received KSI of an original network may be modified, the modified KSI is used as a new KSI, and a user terminal is notified through the notification unit.

Preferably, the modification unit further includes an algorithm module.

The algorithm module is configured to obtain a new KSI by performing calculation according to an old KSI.

And/or, the algorithm unit is configured to assign a new name of a new KSI to an old KSI.

Or, the algorithm unit is configured to request a new KSI from a network entity.

Or, the algorithm unit is configured to obtain a new KSI by performing calculation according to a preset algorithm.

The KSI of the original network is modified with different algorithm units by using different algorithms. The modification may be performed in the target network, and may also be performed in the original network.

In an embodiment, the present invention further provides a network equipment for avoiding network security desynchronization, and the equipment includes the preceding device on the network for avoiding network security desynchronization.

In an embodiment, the present invention provides a device for remedying network security desynchronization. As shown in FIG. 22, the device is located on the network, and the device includes a receiving unit 221, a matching unit 222, a sending unit 223, and an initiation unit 224.

The receiving unit 221 is configured to receive security parameter sent by a user terminal.

The matching unit 222 is configured to match the received security parameter with security parameter thereof.

The sending unit 223 is configured to send security information to the user terminal.

The initiation unit 224 is configured to re-initiate AKA if no reply message from the user terminal is received within a predetermined time.

With the device provided in the embodiment of the present invention, corresponding remedial measures may be taken when network security desynchronization occurs. When the network does not receive reply message sent by the UE within a predetermined time, the network actively initiates AKA, so that failure of the user to access the network due to the network security desynchronization is avoided, and network availability in handover-related scenarios is improved.

## Claims

1. A method for avoiding network security desynchronization, comprising:
performing (1101), by a user terminal, a authentication and key agreement, AKA, process in an original network, wherein the original network is an evolved universal terrestrial radio access network, EUTRAN;
performing (1102), by the user terminal, a network handover from the original network to a new network, wherein the new network is a universal terrestrial radio access network, UTRAN;
performing (1102), by the user terminal, a key derivation in the new network, wherein a ciphering key, CKₚₛ', and an integrity key, IKₚₛ', are derived from a root key, Kasme, of a packet switched domain; and
setting a security parameter stored in a universal subscriber identity module, USIM, in the user terminal to be unavailable, including deleting an original CKₚₛ and an original IKₚₛ in the USIM after the CKₚₛ' and the IKₚₛ' are derived when the user terminal performs handover from the EUTRAN to the UTRAN.

2. The method according to claim 1, wherein the method further comprises:
synchronizing (1102), by the user terminal, with the new network.

3. The method according to any one of claims 1 to 2, wherein the network handover comprises:
a handover of the user terminal in an active state between different networks; or
mobility of the user terminal in an idle state between different networks.

4. A device for avoiding network security desynchronization, located on a user terminal, the device comprising:
a unit, configured to perform a authentication and key agreement, AKA, process in an original network, wherein the original network is an evolved universal terrestrial radio access network, EUTRAN;
a handover unit, configured to perform a network handover of the user terminal from the original network to a new network, wherein the new network is a universal terrestrial radio access network, UTRAN, and perform a key derivation in the new network, wherein the handover unit is further configured to derive a ciphering key, CKₚₛ', and an integrity key, IKₚₛ', from a root key, Kasme, of a packet switched domain;
a modifying unit, configured to modify a security parameter stored in a universal subscriber identity module, USIM, in the user terminal to be unavailable by deleting an original CKₚₛ and an original IKₚₛ in the USIM after the CKₚₛ' and the IKₚₛ' are derived when the user terminal performs handover from the EUTRAN to the UTRAN.

5. A user terminal, comprising the device according to claim 4.

## Patentansprüche

1. Verfahren zum Vermeiden einer Netzsicherheits-Desynchronisation, wobei das Verfahren Folgendes umfasst:
Ausführen (1101) durch ein Anwenderendgerät eines Authentifizierungs- und Schlüsselvereinbarungsprozesses, AKA-Prozesses, in einem ursprünglichen Netz, wobei das ursprüngliche Netz ein entwickeltes universelles terrestrisches Funkzugangsnetz, EUTRAN, ist;
Ausführen (1102) durch das Anwenderendgerät einer Netz-Verbindungsübergabe von dem ursprünglichen Netz zu einem neuen Netz, wobei das neue Netz ein universelles terrestrisches Funkzugangsnetz, UTRAN, ist;
Ausführen (1102) durch das Anwenderendgerät einer Schlüsselableitung in dem neuen Netz, wobei ein Verschlüsselungsschlüssel, CKₚₛ', und ein Integritätsschlüssel, IKₚₛ', von einem Wurzelschlüssel, Kasme, eines paketvermittelten Bereichs abgeleitet werden; und
Setzen eines Sicherheitsparameters, der in einem universellen Teilnehmeridentitätsmodul, USIM, gespeichert ist, in dem Anwenderendgerät, um nicht verfügbar zu sein, einschließlich des Löschens eines ursprünglichen CKₚₛ und eines ursprünglichen IKₚₛ in dem USIM, nachdem der CKₚₛ' und der IKₚₛ' abgeleitet worden sind, wenn das Anwenderendgerät die Verbindungsübergabe von dem EUTRAN zu dem UTRAN ausführt.

2. Verfahren nach Anspruch 1, wobei das Verfahren ferner Folgendes umfasst:
Synchronisieren (1102) durch das Anwenderendgerät mit dem neuen Netz.

3. Verfahren nach einem der Ansprüche 1 bis 2, wobei die Netz-Verbindungsübergabe Folgendes umfasst:
eine Verbindungsübergabe des Anwenderendgeräts in einem aktiven Zustand zwischen verschiedenen Netzen; oder
die Mobilität des Anwenderendgeräts in einem Freizustand zwischen verschiedenen Netzen.

4. Vorrichtung zum Vermeiden der Netzsicherheits-Desynchronisation, die sich in einem Anwenderendgerät befindet, wobei die Vorrichtung Folgendes umfasst:
eine Einheit, die konfiguriert ist, einen Authentifizierungs- und Schlüsselvereinbarungsprozess, AKA-Prozess, in einem ursprünglichen Netz auszuführen, wobei das ursprüngliche Netz ein entwickeltes universelles terrestrisches Funkzugangsnetz, EUTRAN, ist;
eine Verbindungsübergabeeinheit, die konfiguriert ist, eine Netz-Verbindungsübergabe des Anwenderendgeräts von dem ursprünglichen Netz zu einem neuen Netz auszuführen, wobei das neue Netz ein universelles terrestrisches Funkzugangsnetz, UTRAN, ist, und eine Schlüsselableitung in dem neuen Netz auszuführen, wobei die Verbindungsübergabeeinheit ferner konfiguriert ist, einen Verschlüsselungsschlüssel, CKₚₛ', und einen Integritätsschlüssel, IKₚₛ', von einem Wurzelschlüssel, Kasme, eines paketvermittelten Bereichs abzuleiten;
eine Modifizierungseinheit, die konfiguriert ist, einen Sicherheitsparameter, der in einem universellen Teilnehmeridentitätsmodul, USIM, in dem Anwenderendgerät gespeichert ist, durch das Löschen eines ursprünglichen CKₚₛ und eines ursprünglichen IKₚₛ in dem USIM zu modifizieren, um nicht verfügbar zu sein, nachdem der CKₚₛ' und der IKₚₛ' abgeleitet worden sind, wenn das Anwenderendgerät die Verbindungsübergabe von dem EUTRAN zu dem UTRAN ausführt.

5. Anwenderendgerät, das die Vorrichtung nach Anspruch 4 umfasst.

## Revendications

1. Procédé pour éviter une désynchronisation de sécurité d'un réseau, comprenant :
l'exécution (1101), par un terminal utilisateur, d'un processus d'accord d'authentification et de clé, AKA (Authentication and Key Agreement), dans un réseau d'origine, dans lequel le réseau d'origine est un réseau d'accès radio terrestre universel évolué, EUTRAN (Evolved Universal Terrestrial Radio Access Network) ;
l'exécution (1102), par le terminal utilisateur, d'un transfert de réseau du réseau d'origine à un nouveau réseau, dans lequel le nouveau réseau est un réseau d'accès radio terrestre universel, UTRAN (Universal Terrestrial Radio Access Network) ;
l'exécution (1102), par le terminal utilisateur, d'une détermination de clé dans le nouveau réseau, dans lequel une clé de chiffrement, CK_{ps'}, et une clé d'intégrité, IKₚₛ', sont déterminées à partir d'une clé racine, Kasme, d'un domaine à commutation de paquets ; et
la définition d'un paramètre de sécurité stocké dans un module d'identité universelle d'abonné, USIM (Universal Subscriber Identity Module), dans le terminal utilisateur comme étant indisponible, comprenant la suppression d'une CKₚₛ d'origine et d'une IKₚₛ d'origine dans le module USIM après que la CKₚₛ' et que l'IKₚₛ' ont été déterminées lorsque le terminal utilisateur effectue un transfert de l'EUTRAN à l'UTRAN.

2. Procédé selon la revendication 1, dans lequel le procédé comprend en outre :
une synchronisation (1102), par le terminal utilisateur, avec le nouveau réseau.

3. Procédé selon l'une quelconque des revendications 1 à 2, dans lequel le transfert de réseau comprend :
un transfert du terminal utilisateur dans un état actif entre différents réseaux ; ou
la mobilité du terminal utilisateur dans un état inactif entre différents réseaux.

4. Dispositif pour éviter la désynchronisation de sécurité d'un réseau, situé sur un terminal utilisateur, le dispositif comprenant :
une unité, configurée pour effectuer un processus d'accord d'authentification et de clé, AKA, dans un réseau d'origine, dans lequel le réseau d'origine est un réseau d'accès radio terrestre universel évolué, EUTRAN ;
une unité de transfert, configurée pour effectuer un transfert de réseau du terminal utilisateur du réseau d'origine à un nouveau réseau, dans lequel le nouveau réseau est un réseau d'accès radio terrestre universel, UTRAN, et effectuer une détermination de clé dans le nouveau réseau, dans lequel l'unité de transfert est en outre configurée pour déterminer une clé de chiffrement, CKₚₛ', et une clé d'intégrité, IKₚₛ', à partir d'une clé racine, Kasme, d'un domaine à commutation de paquets ;
une unité de modification, configurée pour modifier un paramètre de sécurité stocké dans un module d'identité universelle d'abonné, USIM, dans le terminal utilisateur comme étant indisponible par suppression d'une CKₚₛ' d'origine et d'une IKₚₛ d'origine dans le module USIM après que la CK_{ps'} et que l'IKₚₛ' ont été déterminées lorsque le terminal utilisateur effectue un transfert de l'EUTRAN à l'UTRAN.

5. Terminal utilisateur, comprenant le dispositif selon la revendication 4.
